(19) Europäisches Patentamt European Patent Office Office européen des brevets

(11) **EP 4 435 073 A1**

(12) **EUROPEAN PATENT APPLICATION**

(43) Date of publication:
**25.09.2024  Bulletin 2024/39**

(21) Application number: **23163629.1**

(22) Date of filing: **23.03.2023**

(51) International Patent Classification (IPC):
***C09J 7/21*** *(2018.01)*   ***C09J 7/38*** *(2018.01)*

(52) Cooperative Patent Classification (CPC):
**C09J 7/21; C09J 7/38;** C09J 2400/283;
C09J 2433/00; C09J 2453/00

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **tesa SE**
**22848 Norderstedt (DE)**

(72) Inventors:
• **AHMAD, Fakhar Aziz**
**22848 Norderstedt (DE)**
• **MIES, Michel**
**22848 Norderstedt (DE)**
• **WINKLER, Tobias**
**22848 Norderstedt (DE)**

(74) Representative: **tesa SE**
**Hugo-Kirchberg-Straße 1**
**22848 Norderstedt (DE)**

(54) **TRANSLUCENT ADHESIVE TAPE**

(57)     Adhesive tape comprising a backing layer and an adhesive composition, wherein the backing layer comprises a translucent paper with a transparency of at least 50 %.

Fig. 1

**EP 4 435 073 A1**

**Description**

The invention relates to an adhesive tape and to its use.

Adhesives tapes are used in many applications. They usually comprise at least one backing layer onto which an adhesive composition is applied. They are very common in the use on paper or similar materials, e. g. in office uses or for packaging.

The type of backing layer and adhesive composition can be adapted depending on the use case of the adhesive tape. The tape may be used only for temporary fastening or on different surfaces. In some cases it may be important that the tape can be removed without any residual adhesives on the surface (re-detachability).

Depending on the application it may be beneficial if the tape can be ripped by hand without the need of a cutter.

Another important field are the translucent or transparent adhesive tapes. Such tapes are especially important if the tape has to be invisible when applied to a surface. Such adhesive tapes usually comprise a backing layer made of plastic. Such materials are not completely recyclable, especially when used in an office environment, when the adhesive tape is used on paper. Additionally, the polymers are made of fossil resources. Therefore, their $CO_2$ footprint is rather high. Even when recycled or biobased materials like cellulose acetate are used, a lot of energy is needed for the recycling or production process.

Such transparent tapes are very important in office or packaging uses. Such tapes are used to repair or seal documents or connect documents. Since they are transparent the underlying text remains visible and more preferably the underlying text can be reproduced in a photocopy, preferably without any traces of the tape.

There is the need of a material that has a lower $CO_2$ footprint to improve the environmental impact.

It is the object on the invention to provide an adhesive tape with improved environmental impact, which is translucent.

This aim is achieved by the inventions as claimed in the independent claims. Advantageous embodiments are described in the dependent claims.

The problem is solved with an adhesive tape comprising a backing layer and an adhesive layer comprising a pressure-sensitive adhesive composition on at least one side of the backing layer, wherein the backing layer comprises a translucent paper with a transparency of at least 50 %.

Terms and phrases used in the present invention and in particular for the definition of the particular embodiments and the examples generally have meaning ordinary to those skilled in the art. In addition, the following terms are given the particular meaning as defined below. Such particular definition may be considered in combination with the ordinary meaning used by those skilled in the art.

The "translucent paper" of the present invention means a paper material or a paper object obtained from paper making pulp comprising vegetal fibers, in particular cellulose fibers, e.g., wood cellulose fibers or the like, and is provided as a planar element, in particular a thin planar element such as a sheet of paper, having an opacity or transparency as disclosed herein, including in accordance with the particular embodiments of the examples. The translucent paper of the present invention does not contain a plastic film other than explicitly mentioned, and thus is recyclable and/or repulpable. Other specific features of the translucent paper of the invention are disclosed herein. The wood fibers are especially obtained from sustainable and environmentally friendly sources and processes.

The opacity of a sample is its lack of transparency. A sample with an opacity of 100 % does not allow any light to be transmitted through it and therefore fully obscures anything lying under it. A sample with an opacity near to zero is almost completely transparent and hides nothing. Opacity is inversely proportional to transparency. 0 % transparency corresponds to 100 % opacity and vice versa. Transparency of a paper sheet can be measured by a transparency transmission haze meter, an apparatus known in the field, such as BYK haze-gard. The transparency of a paper may be different, when applied to a surface and/or when a coating is applied. The transparency of a paper correlates also with grammage of a paper, i.e. the transparency of the same paper type decreases with weight / grammage. A material with a transparency of up to 100 % but higher than 30 % is also regarded as translucent. A translucent material with a transparency of 100 % is also regarded as transparent.

Preferably, the translucent paper is a tracing paper, in particular tracing paper, which derives its translucency primarily from the (unusually) high degree of refining of the cellulose pulp fibers from which it is made (natural tracing paper). This results in a sheet without the air/fiber interfaces that give most papers their opacity. The translucency of natural tracing paper does not come from impregnation with an oil or other transparentizing chemical. The natural tracing paper may be a modified natural tracing paper that has improved folding endurance, greater resistance to tearing, greater stretch ability under tensile loading before a break occurs, reduced tensile strength and reduced stiffness, such as a urea-treated natural tracing paper. Alternatively, the translucent paper is glassine paper, impregnated paper, and parchment paper or any paper having basically translucent properties

Prepared tracing paper such as one treated with sulfuric acid may also be used as a translucent paper, such papers are also seen as parchment papers. Also, in prepared tracing paper the translucency does not come from impregnation with an oil or other transparentizing chemical.

It was surprisingly found that an adhesive tape can be obtained by using a backing layer comprising a translucent paper.

Such translucent paper is preferred a tracing paper, more preferred a paper, which derives its translucency primarily from the high degree of refining of the cellulose pulp fibers from which it is made (natural tracing paper) or paper treated with sulfuric acid (prepared tracing paper).

The transparency is measured using the BYK haze-gard transparency transmission haze meter (haze-gard i or haze-gard i Pro from BYK-Gardner GmbH, Geretsried, Germany) according to ASTM D1003 and ISO 13468. The transparency as claimed refers to the transparency of the paper not on a surface. Even if the paper and the adhesive tape is not completely transparent in free form, it becomes transparent when applied to a surface. This is based on the physical properties of tracing papers, that the transparency increases when a coating is applied or the paper is in contact with a surface.

In a preferred embodiment the transparency of the paper is at least 60 %, more preferably at least 70 % even more preferably at least 80 %.

In a preferred embodiment the transparency of the paper is in the range from 60 % to 100 %, more preferably in the range from 65 % to 100 %, even more preferably in the range from 70 % to 100 %, even more preferably in the range from 70 % to 99 %, even more preferably from 75 % to 95 % and most preferred from 80 % to 90 % .

The transparency is measured as transparency of the paper not in contact with any surface.

In a preferred embodiment the paper has a grammage in the range of 25 g/m$^2$ to 60 g/m$^2$, preferably 25 g/m$^2$ to 50 g/m$^2$, especially preferred 30 g/m$^2$ to 45 g/m$^2$. The preferred grammage also depends on the production method of the adhesive tape.

Another property of the paper is the wet strength of the paper. This is especially important since many of the coatings used for adhesive coating or release coating are water-based compositions. A low wet strength makes the handling of the paper during production difficult.

The wet strength can be characterized by elongation at break under wet conditions and/or tensile strength under wet conditions.

In a preferred embodiment the elongation at break under wet conditions is below 20 % in machine direction (MD) and below 20 % in cross-machine direction (CD), preferably in the range from 0.5 to 17 % in MD and 0.5 to 20 % in CD, and more preferably in the range from 1 to 6 % in MD and 5 to 19 % in CD according to ISO 3781.

In a preferred embodiment the tensile strength under wet conditions is more than 1 N/cm in MD and more than 0.4 N/cm in CD, preferably in the range from 2 to 60 N/cm in MD and 0.5 to 30 N/cm in CD and more preferably in the range from 10 to 45 N/cm in MD and 10 to 30 N/cm in CD according to ISO 3781.

In a preferred embodiment the elongation at break under dry conditions is below 15 % in MD and below 20 % in CD, preferably in the range from 1 to 10 % in MD and 0,5 to 17 % in CD and more preferably in the range from 1 to 5 % in MD and 2 to 15 % in CD according to ISO 1924.

In a preferred embodiment the tensile strength under dry conditions is more than 8 N/cm in MD and more than 5 N/cm in CD, preferably in the range from 10 to 55 N/cm in MD and 8 to 40 N/cm in CD and more preferably in the range from 25 to 42 N/cm in MD and to 10 to 30 N/cm in CD according to ISO 1924.

In a preferred embodiment the water take up is below 65 g/m$^2$, preferably in the range from 10 to 61 g/m$^2$ and more preferably in the range from 12 to 35 g/m$^2$ according to the ISO 535:2014.

In a preferred embodiment the thickness of the paper is in the range from 20 $\mu$m to 70 $\mu$m, more preferably in the range from 25 $\mu$m to 55 $\mu$m.

The preferred embodiments may be present alone or in combination with one another. The paper may for example show the wet tensile strength in MD and the water uptake as described in the preferred embodiments.

In a preferred embodiment the paper is made of at least 95 % by weight natural cellulose fibers, preferably 100 % by weight natural cellulose fibers. This reduces the $CO_2$ footprint of the adhesive tape further.

In a preferred embodiment the paper is not impregnated with saturants. Usually in most paper based adhesive tapes the paper backing layer is impregnated to increase water and solvent resistance of the paper. Saturants also increase the paper strength during the coating process. Such saturants are usually present up to 10 % by weight of the paper weight. Saturants are usually emulsions of acrylic, styrene acrylic and styrene butadiene polymers. Such saturants also increase the $CO_2$ footprint of the paper.

In a preferred embodiment the paper of the adhesive tape does not comprise any saturants. This increases the biobased content in the final product. This also increases the recycling of the adhesive tape in the repulping process.

In the adhesive tapes according to the invention, a pressure-sensitive adhesive layer is disposed on one side of the backing layer. In the present application, the terms "pressure-sensitive adhesive" and "self-adhesive" and the terms "pressure-sensitively adhesive" and "self-adhesive" are used synonymously.

A "pressure-sensitive adhesive" is in general a substance which is permanently tacky and adhesive - especially at room temperature. It is a characteristic feature of a pressure-sensitive adhesive that it can be applied to a substrate by pressure and adheres there, with no specific definition of the pressure to be expended and the time for which this pressure is applied. In some cases, depending on the exact type of pressure-sensitive adhesive, temperature and air humidity, and the substrate, the application of a brief minimal pressure not exceeding a light touch for a brief moment is sufficient to achieve the adhesion effect; in other cases, even a prolonged period of application of a high pressure may be necessary.

Pressure-sensitive adhesives have particular characteristic viscoelastic properties that lead to permanent tack and adhesiveness. It is a characteristic feature of these that, when they are mechanically deformed, the result is both viscous flow processes and the development of elastic resilience forces. Both processes are in a particular ratio to one another in terms of their respective proportions, depending both on the exact composition, structure, and level of crosslinking of the pressure-sensitive adhesive and on the speed and duration of the deformation, and on the temperature.

The viscous flow component is necessary for achievement of adhesion. Only the viscous components caused by macromolecules having relatively high mobility enable good wetting and good adaptation to the substrate to be bonded. A high proportion of viscous flow leads to high pressure-sensitive adhesiveness (also referred to as tack or surface tack) and hence often also to a high bonding force. Highly crosslinked systems, or polymers that are crystalline or solidify in vitreous form, generally have at least only low pressure-sensitive adhesion, if any, for lack of free-flowing components.

The elastic resilience force components are needed for achievement of cohesion. They are caused, for example, by very long-chain and entangled macromolecules that are crosslinked physically or chemically, and enable transmission of the forces that attack an adhesive bond. They have the effect that an adhesive bond can withstand a sustained stress acting thereon, for example in the form of a sustained shear stress, to a sufficient degree over a prolonged period of time.

For more exact description and quantification of the degree of elastic and viscous components and of the relative ratio of the components, it is possible to use the parameters of storage modulus (G') and loss modulus (G") that can be determined by means of dynamic-mechanical analysis (DMA). G' is a measure of the elastic component, G" a measure of the viscous component of a substance. Both parameters are dependent on deformation frequency and temperature.

The parameters can be ascertained with the aid of a rheometer. The material to be examined is subjected here to a sinusoidally oscillating shear stress, for example in a plate-plate arrangement. In the case of shear stress-controlled devices, deformation is measured as a function of time and of the time delay of this deformation with respect to the onset of shear stress. This time delay is referred to as the phase angle $\delta$. The storage modulus G' is defined as follows: G' $=(\tau/\gamma) \cdot \cos(\delta)$ ($\tau$ = shear stress, $\gamma$ = deformation, $\delta$ = phase angle = phase shift between shear stress vector and deformation vector).

A substance is generally considered to be pressure-sensitively adhesive and is defined as being pressure-sensitively adhesive for the purposes of the invention when, at room temperature, here by definition at 23°C, G' is at least partly within the range from $10°$ to $10^1$ rad/sec within the deformation frequency range from $10^3$ to $10^7$ Pa, and when G" is likewise at least partly within this range. What is meant by "partly" is that at least a section of the G' curve is within the window defined by the deformation frequency range from $10°$ to $10^1$ rad/sec inclusive (abscissa) and the range of G' values from $10^3$ to $10^7$ Pa inclusive (ordinate) This is correspondingly true of G".

In a preferred embodiment the adhesive composition is solvent-based, water-based or hotmelt system adhesive, preferably water-based or hotmelt system adhesive.

The pressure-sensitive adhesive composition of the adhesive tape can be adapted to the intended application of the adhesive tape. Non-limiting examples of suitable adhesives include natural rubber, synthetic rubber, acrylic-based adhesives, silicone-based adhesives, modified acrylic-based adhesives, modified rubber-based adhesives, and combinations thereof.

The pressure-sensitive adhesive composition of the adhesive tape according to the invention may be based on polymers of different chemical structure. For example, they may be based on acrylate (co)polymer, silicone (co)polymer, natural rubber, nitrile rubber, i.e., acrylonitrile-butadiene rubber, chemically or physically crosslinked synthetic rubber or a mixture (blend) thereof.

It is possible to use silicone adhesives and also polyacrylate adhesives, preferably a low molecular mass acrylate hotmelt pressure-sensitive adhesive or a water-based polyacrylate adhesive.

The adhesive is a pressure sensitive adhesive (PSA). These are materials having a tacky surface and the ability to adhere without activation by any energy source. These materials adhere when pressed against the surface, preferably already when pressed by hand. The adhesive has more preferably enough cohesive strength to be removed cleanly from the adherend.

In a preferred embodiment of the invention the adhesive composition is present with a weight in the range from 5 g/m$^2$ to 30 g/m$^2$, preferably from 10 g/m$^2$ to 25 g/m$^2$.

The adhesive composition may consist of natural rubbers or of any desired blend of natural rubbers and/or synthetic rubbers, the proportion of synthetic rubber in the blend, according to one preferred variant, being at most as great as the proportion of the natural rubber.

Rubber adhesives display a good combination of bond strength, tack and cohesion and also balanced adhesion performance on virtually all relevant substrates and are therefore predestined. General information on rubber adhesives can be found in sources including standard works for adhesive tapes, such as, for example, the "Handbook of Pressure Sensitive Adhesive Technology", Third Edition, (1999), by Donatas Satas.

The natural rubber or natural rubbers may be selected in principle from all available qualities such as, for example, crepe, RSS, ADS, TSR, or CV types, according to the required level of purity and of viscosity, and the synthetic rubber or synthetic rubbers may be selected from the group of randomly copolymerized styrene-butadiene rubbers (SBR), styrene-isoprene rubbers (SIS), butadiene rubbers (BR), synthetic polyisoprenes (IR), butyl rubbers (IIR), halogenated butyl rubbers (XIIR), acrylate rubbers (ACM), ethylene-vinyl acetate copolymers (EVA), and polyurethanes, and/or blends thereof.

The synthetic rubber used is preferably at least one vinylaromatic block copolymer in the form of a block copolymer having an A-B, A-B-A, $(A-B)_n$, $(A-B)_n X$, $(A-B-A)_n X$ or $A-B-X(A'-B')_n$ structure, in which

- the A or A' blocks are independently a polymer formed by polymerization of at least one vinylaromatic, for example styrene or $\alpha$-methylstyrene;
- the B or B' blocks are independently a polymer formed by polymerization of conjugated dienes having 4 to 18 carbon atoms and/or a polymer formed from an isoprene, butadiene, a farnesene isomer or a mixture of butadiene and isoprene or a mixture of butadiene and styrene, or containing entirely or partially ethylene, propylene, butylene and/or isobutylene, and/or a partly or fully hydrogenated derivative of such a polymer;
- X is the radical of a coupling reagent or initiator and
- n is an integer $\geq$ 2.

More particularly, all synthetic rubbers are block copolymers having a structure as detailed above. The synthetic rubber may thus also comprise mixtures of various block copolymers having a construction as above. A-B diblock copolymers are typically not used alone. Suitable block copolymers (vinylaromatic block copolymers) thus comprise one or more rubber-like blocks B or B' (soft blocks) and one or more glass-like blocks A or A' (hard blocks). Particular preference is given to a block copolymer having an A-B, A-B-A, $(A-B)_3 X$ or $(A-B)_4 X$ construction, where the above meanings are applicable to A, B and X. Most preferably, all synthetic rubbers are block copolymers having an A-B, A-B-A, $(A-B)_3 X$ or $(A-B)_4 X$ construction, where the above meanings are applicable to A, B and X. More particularly, the synthetic rubber is a mixture of block copolymers having an A-B, A-B-A, (AB)sX or $(A-B)_4 X$ structure, preferably comprising at least diblock copolymers A-B and/or triblock copolymers A-B-A.

Also advantageous is a mixture of diblock and triblock copolymers and $(A-B)_n$ or $(A-B)_n X$ block copolymers with n not less than 3.

A blocks are generally vitreous blocks each having a glass transition temperature above room temperature (room temperature in the context of this invention shall be understood to mean 23°C). In some advantageous embodiments, the glass transition temperature of the vitreous block is at least 40°C, preferably at least 60°C, even more preferably at least 80°C or very preferably at least 100°C.

The vinylaromatic block copolymer generally also has one or more rubber-like B blocks having a glass transition temperature less than room temperature. In some embodiments, the $T_g$ of the soft block is less than -30°C or even less than -60°C.

As well as the inventive and particularly preferred monomers mentioned for the B blocks, further advantageous embodiments include a polymerized conjugated diene, a hydrogenated derivative of a polymerized conjugated diene or a combination thereof. In some embodiments, the conjugated dienes comprise 4 to 18 carbon atoms.

Preferred conjugated dienes as monomers for the soft block B are especially selected from the group consisting of butadiene, isoprene, ethylbutadiene, phenylbutadiene, piperylene, pentadiene, hexadiene, ethylhexadiene and dimethylbutadiene, and any desired mixtures of these monomers. The B block may also be in the form of a homopolymer or copolymer.

Examples of further advantageous conjugated dienes for the B blocks additionally include ethylbutadiene, phenylbutadiene, piperylene, pentadiene, hexadiene, ethylhexadiene and dimethylbutadiene, where the polymerized conjugated dienes may be in the form of a homopolymer or of a copolymer.

More preferably, the conjugated dienes as monomers for the soft block B are selected from butadiene and isoprene. For example, the soft block B is a polyisoprene, a polybutadiene or a partly or fully hydrogenated derivative of one of these two polymers, such as polybutylenebu-tadiene in particular, or a polymer formed from a mixture of butadiene and isoprene. Most preferably, the B block is a polybutadiene.

The proportion of A blocks based on the overall block copolymers preferably averages 10% to 40% by weight, more preferably 15% to 33% by weight.

A preferred polymer for A blocks is polystyrene. Preferred polymers for B blocks are polybutadiene, polyisoprene, polyfarnesene and the partly or fully hydrogenated derivatives thereof, such as polyethylene-butylene, polyethylene-propylene, polyethylene-ethylene-propylene or polybutylene-butadiene or polyisobutylene. Polybutadiene is very preferred. Mixtures of different block copolymers may be used. Preference is given to using triblock copolymers ABA and/or diblock copolymers AB.

Block copolymers may be linear, radial or star-shaped (multi-arm).

The aforementioned types of vinylaromatic block copolymers are also preferably used in pressure-sensitive adhesives based on vinylaromatic block copolymer.

Furthermore, preferably, in order to enhance their processing qualities, the rubbers may be admixed with thermoplastic elastomers, with a weight fraction of 10 to 50 % by weight, based on the overall elastomer fraction.

Representatives that may be mentioned at this point include in particular the especially compatible styrene-isoprene-styrene (SIS) and styrene-butadiene-styrene (SBS) types.

Suitable elastomers for blending are also, for example, EPDM or EPM rubber, polyisobutylene, butyl rubber, ethylene-vinyl acetate, hydrogenated block copolymers of dienes (for example, by hydrogenation of SBR, cSBR, BAN, NBR, SBS, SIS, or IR; such polymers are known, for example, as SEPS and SEBS) or acrylate copolymers such as ACM.

In addition, a 100% system of styrene-isoprene-styrene (SIS) has proven suitable.

Crosslinking is advantageous for improving the re-detachability of the adhesive tape after application and may be accomplished thermally or by irradiation with UV light or electron beams.

For the purpose of thermally induced chemical crosslinking it is possible to use all known thermally activatable chemical crosslinkers such as accelerated sulfur systems or sulfur donor systems, isocyanate systems, reactive melamine-, formaldehyde-, and (optionally halogenated) phenol-formaldehyde resins and/or reactive phenolic resin or diisocyanate crosslinking systems with the corresponding activators, epoxidized polyester resins and acrylate resins, and also combinations thereof.

The crosslinkers are preferably activated at temperatures above 50 °C., more particularly at temperatures from 100 °C. to 160 °C., very preferably at temperatures from 110 °C. to 140 °C.

Thermal excitation of the crosslinkers may also take place via IR rays or high-energy alternating fields.

The rubber adhesives, preferably natural rubber or synthetic rubber, are preferably rubber adhesives processable as a hotmelt, especially rubber-based hot melt adhesives.

In the present application, the terms "acrylate", "acrylate-based" and "polyacrylate" are used synonymously. Each is understood to mean a polymer originating from a polymerization of (meth)acrylic acid, an ester thereof or mixtures of the aforementioned monomers, and optionally further copolymerizable monomers. The term "(meth)acrylic acid" also includes both acrylic acid and methacrylic acid. The polyacrylates are typically copolymers.

Polyacrylate pressure-sensitive adhesives usable for the purposes of the invention are solvent-based or water-based polyacrylate adhesives, preferably water-based polyacrylate, or else in the form of a hotmelt system, for example an acrylate hotmelt-based composition, where the latter may have a K value of at least 20, more particularly greater than 30, obtainable by concentrating a solution of such a composition to a system processible as a hotmelt.

The concentrating may take place in appropriately equipped tanks or extruders; preference is particularly given to a vented extruder in the case of associated degassing an adhesive of this kind is set out in DE 43 13 008 A1, the content of which is hereby referenced and incorporated into the present disclosure and invention.

The polyacrylate hotmelt-based adhesive, however, may also be crosslinked chemically.

An adhesive which is likewise found to be suitable is acrylate dispersion pressure-sensitive adhesives as obtainable, for example, under the Acronal® trade name, especially Acronal® DS 3458, from BASF.

In a further embodiment, copolymers used in pressure-sensitive adhesives are those of (meth)acrylic acid and esters thereof having 1 to 25 carbon atoms, maleic, fumaric and/or itaconic acid and/or their esters, substituted (meth)acrylamides, maleic anhydride and other vinyl compounds, such as vinyl esters, more particularly vinyl acetate, vinyl alcohols and/or vinyl ethers. The residual solvent content ought to be below 1 % by weight.

Another preferred embodiment is a pressure-sensitive adhesive comprising a polyacrylate polymer. This is a polymer obtainable by free-radical polymerization of acrylic monomers, which are also understood to mean methacrylic monomers, and optionally further copolymerizable monomers.

According to the invention, it may be a polyacrylate crosslinkable with epoxy groups. Accordingly, monomers or comonomers used may preferably be functional monomers crosslinkable with epoxy groups; monomers employed here especially include monomers having acid groups (particularly carboxylic acid, sulfonic acid or phosphonic acid groups) and/or hydroxyl groups and/or acid anhydride groups and/or epoxy groups and/or amine groups; preference is given to monomers containing carboxylic acid groups. It is especially advantageous when the polyacrylate includes polymerized acrylic acid and/or methacrylic acid. Further monomers which can be used as comonomers for the polyacrylate are, for example, acrylic and/or methacrylic esters having up to 30 carbon atoms, vinyl esters of carboxylic acids having up to 20 carbon atoms, vinylaromatics having up to 20 carbon atoms, ethylenically unsaturated nitriles, vinyl halides, vinyl ethers of alcohols containing 1 to 10 carbon atoms, aliphatic hydrocarbons having 2 to 8 carbon atoms and 1 or 2 double bonds, or mixtures of these monomers.

Preference is given to using a polyacrylate which can be derived from the following monomer composition:

i. acrylic esters and/or methacrylic esters of the following formula

$$CH_2=C(R^1)(COOR^2)$$

where $R^1$ = H or $CH_3$ and $R^2$ = H or linear, branched or cyclic, saturated or unsaturated alkyl radicals having 1 to 30 and especially having 4 to 18 carbon atoms,

ii. olefinically unsaturated monomers having functional groups of the type already defined for reactivity with epoxy groups,

iii. optionally further acrylates and/or methacrylates and/or olefinically unsaturated monomers copolymerizable with component (i).

Further preferably, for use of the polyacrylate as pressure-sensitive adhesive, the proportions of the corresponding components (i), (ii) and (iii) are chosen such that the polymerization product especially has a glass transition temperature of not more than 15 °C (determined by DSC (differential scanning calorimetry) according to DIN 53 765 at a heating rate of 10 K/min).

It is very advantageous for production of the pressure-sensitive adhesives that the monomers of component (i) be chosen with a proportion of 45% to 95% by weight, the monomers of component (ii) with a proportion of 1% to 15% by weight and the monomers of component (iii) with a proportion of 0% to 40% by weight (the figures are based on the monomer mixture for the "base polymer", i.e. without additions of any additives to the finished polymer, such as resins).

The monomers of component (i) are especially plasticizing and/or nonpolar monomers. Preference is given to using, for the monomers (i), acrylic monomers comprising acrylic and methacrylic esters having alkyl groups consisting of 4 to 18 carbon atoms, preferably 4 to 9 carbon atoms. Examples of such monomers are n-butyl acrylate, n-butyl methacrylate, n-pentyl acrylate, n-pentyl methacrylate, n-amyl acrylate, n-hexyl acrylate, hexyl methacrylate, n-heptyl acrylate, n-octyl acrylate, n-octyl methacrylate, n-nonyl acrylate, isobutyl acrylate, isooctyl acrylate, isooctyl methacrylate and the branched isomers thereof, for example 2-ethylhexyl acrylate or 2-ethylhexyl methacrylate.

Preference is given to using, for component (ii), monomers having those functional groups selected from the group consisting of hydroxyl, carboxyl, sulfo or phosphonic acid groups, acid anhydrides, epoxides, amines.

Particularly preferred examples of monomers of component (ii) are acrylic acid, methacrylic acid, itaconic acid, maleic acid, fumaric acid, crotonic acid, aconitic acid, dimethylacrylic acid, β-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate.

Monomers mentioned by way of example for component (iii) are: methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, t-butylphenyl acrylate, t-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, phenoxyethyl acrylate, phenoxyethyl methacrylate, 2-butoxyethyl methacrylate, 2-butoxyethyl acrylate, 3,3,5-trimethylcyclohexyl acrylate, 3,5-dimethyladamantyl acrylate, 4-cumylphenyl methacrylate, cyanoethyl acrylate, cyanoethyl methacrylate, 4-biphenyl acrylate, 4-biphenyl methacrylate, 2-naphthyl acrylate, 2-naphthyl methacrylate, tetrahydrofufuryl acrylate, diethylaminoethyl acrylate, diethylaminoethyl, methacrylate, dimethylaminoethyl acrylate, dimethylaminoethyl methacrylate, 2-butoxyethylacrylate, 2-butoxyethyl methacrylate, methyl 3-methoxyacrylate, 3-methoxybutyl acrylate, phenoxyethyl acrylate, phenoxyethyl methacrylate, 2-phenoxyethyl methacrylate, butyldiglycol methacrylate, ethylene glycol acrylate, ethylene glycol monomethyl acrylate, methoxy polyethylene glycol methacrylate 350, methoxy polyethylene glycol methacrylate 500, propylene glycol monomethacrylate, butoxy diethylene glycol methacrylate, ethoxy triethylene glycol methacrylate, octafluoropentyl acrylate, octafluoropentyl methacrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl methacrylate, 2,2,3,4,4,4-hexafluorobutyl methacrylate, 2,2,3,3,4,4,4-heptafluorobutyl acrylate, 2,2,3,3,4,4,4-heptafluorobutyl methacrylate, 2,2,3,3,4,4,5,5,6,6,7,7,8,8,8-pentadecafluorooctyl methacrylate, dimethylaminopropy-lacrylamide, dimethylaminopropylmethacrylamide, N-(1-methylundecyl)acrylamide, N-(n butoxymethyl)acrylamide, N-(butoxymethyl)methacrylamide, N-(ethoxymethyl)acrylamide, N-(noctadecyl) acrylamide, and also N,N-dialkyl-substituted amides, for example N,Ndimethylacrylamide, N,N-dimethylmethacrylamide, N-benzylacrylamide, N-isopropylacrylamide, N-tert-butylacrylamide, N-tert-octylacrylamide, N-methylolacrylamide, N-methylolmethacrylamide, acrylonitrile, methacrylonitrile, vinyl ethers such as vinyl methyl ether, ethyl vinyl ether, vinyl isobutyl ether, vinyl esters such as vinyl acetate, vinyl chloride, vinyl halides, vinylidene chloride, vinylidene halides, vinylpyridine, 4-vinylpyridine, N-vinylphthalimide, N-vinyllactam, Nvinylpyrrolidone, styrene, α- and p-methylstyrene, α-butylstyrene, 4-n-butylstyrene, 4-nde-cylstyrene, 3,4-dimethoxystyrene, macromonomers such as 2-polystyreneethyl methacrylate (molecular weight Mw of 4000 to 13 000 g/mol), poly(methylmethacrylate)ethyl methacrylate (Mw of 2000 to 8000 g/mol).

Monomers of component (iii) may advantageously also be chosen such that they contain functional groups that assist subsequent radiation-chemical crosslinking (for example by electron beams, UV). Suitable copolymerizable photoinitiators are, for example, benzoin acrylate and acrylate-functionalized benzophenone derivatives. Monomers that assist crosslinking by electron bombardment are, for example tetrahydrofurfuryl acrylate, N-tert-butylacrylamide and allyl acrylate, but this enumeration is not conclusive.

In addition, the composition of the pressure-sensitive adhesive based on polyacrylate (or based on an acrylate blend) often includes epoxy-based crosslinkers. Substances containing epoxy groups that are used are especially polyfunctional epoxides, i.e., those that have at least two epoxy units per molecule (i.e. are at least bifunctional). These may be either aromatic or aliphatic compounds. Epoxy-based crosslinkers may also be used in oligomeric or polymeric form.

The mixture of acrylates may in turn further preferably have the following composition:

(I) 90% to 99.5% by weight of n-butyl acrylate and/or 2-ethylhexyl acrylate,
(II) 0% to 10% by weight of an ethylenically unsaturated monomer having an acid or acid anhydride function,

where (I) and (II) preferably add up to 100% by weight.

Preferably, the monomer (I) is composed of a mixture of 2-ethylhexyl acrylate and n-butyl acrylate, further preferably in equal parts.

Useful monomers (II) advantageously include acrylic acid, methacrylic acid, itaconic acid, maleic acid, fumaric acid and/or maleic anhydride, for example.

Preference is given to acrylic acid or methacrylic acid, optionally the mixture of the two.

For achievement of pressure-sensitive adhesive properties, the adhesive should be above its glass transition temperature at the processing temperature in order to have viscoelastic properties. The glass transition temperature of the pressure-sensitive adhesive formulation (polymer-tackifier mixture) is therefore preferably below +15°C (determined by DSC (differential scanning calorimetry) according to DIN 53 765 at a heating rate of 10 K/min).

The glass transition temperature ($T_G$) of the acrylate copolymers can be estimated according to the Fox equation from the glass transition temperatures of the homopolymers and their relative ratios.

To achieve polymers, for example pressure-sensitive adhesives or heat-sealing compositions, having desired glass transition temperatures, the quantitative composition of the monomer mixture is advantageously chosen so as to give the desired $T_G$ for the polymer according to equation (G1) in analogy to the Fox equation (cf. T.G. Fox, Bull. Am. Phys. Soc. 1956, 1, 123).

$$\frac{1}{T_G} \quad \sum_n \frac{w_n}{T_{G,n}} \qquad \text{(G1)}$$

n = serial number over the monomers used,
$w_n$ = proportion by mass of the respective monomer n (% by weight) and
$T_{G,n}$ = respective glass transition temperature of the homopolymer formed from the respective monomers n in K.

Analogously, equation G1 can also be employed for determination and prediction of the glass transition temperature of polymer mixtures. In that case, if the mixtures are homogeneous mixtures,

n = serial number over the polymers used,
$w_n$ = proportion by mass of the respective polymer n (% by weight) and
$T_{G,n}$ = respective glass transition temperature of the polymer n in K.

In a preferred embodiment the mixture of acrylates may in turn further preferably have the following composition:

(I) 90% to 99.5% by weight, preferably 96 % to 99.5 % by weight of n-butyl acrylate,
(II) 0.5% to 3% by weight of acrylic acid, methacrylic acid or a mixture thereof;

or

( I) 80% to 90% by weight of 2-ethylhexyl acrylate and 8% to 20% by weight of n-butyl acrylate,
( II) 0 % to 3% by weight of acrylic acid, methacrylic acid or a mixture thereof.

The polyacrylates are preferably used as water-based dispersions with a solid content between 40% and 70% by weight, preferably between 45% and 65% by weight.

The possible addition of tackifiers, i.e. tackifying resins, inevitably increases the glass transition temperature, by about 5 to 40 K according to the amount added, compatibility and softening temperature. Preference is therefore given to acrylate copolymers having a glass transition temperature of not more than 0 °C.

Preferably the glass transition temperature of the adhesive composition is below -30 °C, preferably below -40 °C, more preferably in the range from -60 °C to -40 °C.

Lastly it may be mentioned that polyurethane-based or polyolefin-based adhesives are suitable as well.

The adhesive preferably is an aqueous milky acrylic emulsion. The adhesive has a solid content of around 53 % by weight (range of solid content could vary from 50 to 65% by weight), the rest is water. The pH of such PSA emulsions could range between 8 to 10. A typical composition for such type water-based acrylic (wb. ac.) is: 98% n-butyl acrylate and 2% acrylic acid, they are the two components of the adhesive polymer chain.

Examples for such dispersions, which are commercially available, are PRIMAL PS 83D dispersion from Rohm & Haas or Dow, Plextol XA 2051 from Synthomer or Orgal KY 600 B from Organik Kimya.

For the purpose of optimizing the properties, the pressure-sensitive adhesive employed may have been blended with tackifiers (resins) and/or with one or more adjuvants such as plasticizers, fillers, pigments, UV absorbers, light stabilizers, aging inhibitors, crosslinking agents, crosslinking promoters, or elastomers.

A "tackifier resin" or "tackifying resin", in the following called tackifier, according to the general understanding of those skilled in the art, is understood to refer to an oligomeric or polymeric resin-based substance which increases auto adhesion (tack, intrinsic tackiness) of the pressure-sensitive adhesive compared to the pressure-sensitive adhesive that does not contain any tackifier but is otherwise identical.

Tackifiers are, for example, especially nonhydrogenated or partially, selectively or fully hydrogenated hydrocarbon resins (for example polymers based on unsaturated C5, C7 or C9 monomers or mixtures of these monomers, preferably C5 or C5/C9 monomers), hydrocarbon resin from aromatic petroleum food stock like Eastman Picco A10, terpene-phenolic resins, polyterpene resins from raw materials such as $\alpha$- or $\beta$-pinene and/or $\delta$-limonene, aromatic resins such as indene-coumarone resins, or resins based on styrene or $\alpha$-methyl-styrene such as rosin and its derivatives, such as disproportionated, dimerized, or esterified rosin, for example reaction products with glycol, glycerol, or pentaerythritol. Particularly suitable are aging-stable resins without an olefinic double bond (having no readily oxidizable double bonds), such as terpene-phenolic resins, aromatic resins and more preferably hydrogenated resins, for example hydrogenated aromatic resins, hydrogenated polycyclopentadiene resins, hydrogenated rosin derivatives or hydrogenated polyterpene resins.

Preference is given to resins based on polymers based on unsaturated C5 or C5/C9 monomers. Examples for these resins are Eastman Picco A10 or Eastman Piccotac 1095 Hydrocarbon Resin (C5 tackifier). Preference is likewise given to tackifying resins having a softening point above 80°C according to ASTM E28-99 (2009).

Express reference may be made to the depiction of the state of knowledge in the "Handbook of Pressure Sensitive Adhesive Technology", Third Edition, (1999), by Donatas Satas.

For the purpose of stabilization, customary adjuvants may be added to the adhesive, such as aging inhibitors (antiozonants, antioxidants, light stabilizers, and so on).

Additives for the adhesive that are typically utilized are as follows:

Plasticizing agents such as, for example, plasticizer oils or low molecular mass liquid polymers such as low molecular mass polybutenes, for example, primary antioxidants such as sterically hindered phenols, for example, secondary antioxidants such as phosphites or thiosyneigists (thioethers), for example, process stabilizers such as C-radical scavengers, for example, light stabilizers such as UV absorbers or sterically hindered amines, for example, processing assistants, wetting additives, adhesion promoters, endblock reinforcer resins and/or optionally further polymers preferably elastomeric in nature; elastomers utilizable accordingly include, among others, those based on pure hydrocarbons, as for example unsaturated polydienes such as natural or synthetically generated polyisoprene or polybutadiene, chemically substantially saturated elastomers such as, for example, saturated ethylene-propylene copolymers, $\alpha$-olefin copolymers, polyisobutylene, butyl rubber, ethylene-propylene rubber, and also chemically functionalized hydrocarbons such as, for example, halogen-containing, acrylate-containing, allyl or vinyl ether-containing polyolefins, fillers such as fibers, zinc oxide, titanium dioxide, solid microspheres, solid or hollow glass spheres, silica, silicates, chalk.

Suitable fillers and pigments are, for example, fibers, carbon black, zinc oxide, titanium dioxide, solid microbeads, solid or hollow glass beads, silica, silicates, chalk, titanium dioxide, calcium carbonate and/or zinc carbonate. Preferably transparent fillers are used.

Suitable aging inhibitors (antiozonants, antioxidants, light stabilizers, etc.) for the adhesives are primary antioxidants such as sterically hindered phenols, for example, secondary antioxidants such as phosphites or thiosyneigists (thioethers), for example, and/or light stabilizers such as UV absorbers or sterically hindered amines, for example.

Suitable plasticizers are, for example, aliphatic, cycloaliphatic, and aromatic mineral oils, diesters or polyesters of phthalic acid, trimellitic acid, or adipic acid, liquid rubbers (for example, nitrile rubbers or polyisoprene rubbers), liquid polymers of butene and/or isobutene, acrylic esters, polyvinyl ethers, liquid resins and plasticizing resins based on the raw materials for tackifier resins, wool wax and other waxes, or liquid silicones.

Crosslinking agents are, for example, phenolic resins or halogenated phenolic resins, melamine resins and formaldehyde resins. Suitable crosslinking promoters are, for example, maleimides, allyl esters such as triallyl cyanurate, and polyfunctional esters of acrylic and methacrylic acids.

The substances recited are in turn not mandatory; the adhesive also functions without their addition individually or in any combination, in other words without resins and/or residual adjuvants.

The adhesive composition preferably forms a layer on the baking.

The adhesive composition on the backing layer has a weight in the range of 10 to 30 g/m², preferably from 10 to 25 g/m², more preferably from 13 g/m² to 20 g/m².

The adhesive composition preferably has a thickness in the range of 5 to 40 $\mu$m. The thickness depends on the coating weight of the adhesive composition.

The adhesive tape may be produced in the form of a roll, in other words in the form of an Archimedean spiral wound up into itself, or else with lining on the adhesive side using release materials such as siliconized paper or siliconized film.

In a preferred embodiment the adhesive tape comprises a release coating on the backing layer opposite to the adhesive composition.

The release coating may have had a reverse-face varnish applied to it, in order to exert a favorable influence over the unwind properties of the adhesive tape wound to form an Archimedean spiral. For this purpose, this reverse-face varnish may have been equipped with silicone or fluorosilicone compounds and also with polyvinylstearylcarbamate, polyethylene-iminestearylcarbamide, or organofluorine compounds as substances with adhesive (antiadhesive) effect.

Further suitable release coatings include surfactant-based release systems based on long-chain alkyl groups such as stearyl sulfosuccinates or stearyl sulfosuccinamates, but also polymers, which may be selected from the group consisting of polyvinyistearylcarbamates, polyethyleneiminestearylcarbamides, chromium complexes of $C_{14}$ to $C_{28}$ fatty acids, and stearyl copolymers, as described in DE 28 45 541 A, for example. Likewise suitable are release agents based on acrylic polymers with perfluorinated alkyl groups, silicones or fluorosilicone compounds, for example based on poly (dimethylsiloxanes). With particular preference the release coating comprises a silicone-based polymer. Particularly preferred examples of such silicone-based polymers with release effect include polyurethane-modified and/or polyurea-modified silicones, preferably organo-polysiloxane/ polyurea/polyurethane block copolymers, more preferably those as described in example 19 of EP 1 336 683 B1, very preferably anionically stabilized polyurethane-modified and urea-modified silicones having a silicone weight fraction of 70% and an acid number of 30 mg KOH/g. An effect of using polyurethane-modified and/or urea-modified silicones is that the products of the invention combine optimized aging resistance and universal writability with an optimized release behavior.

Further suitable release coatings are crosslinked vinyl acrylic copolymers, preferably self-crosslinking vinyl acrylic copolymers, or acrylic polymers, preferably free of silicone. Such releases are available as water-based systems with a solid content of lower than 60 % by weight, preferably in a range from 10 to 50 % by weight. Examples for commercially available release coatings are Suncryl® 129 and Suncryl® HP 114 from Synthomer plc, UK.

Such a release coating is suitable for paper tape applications, delivering excellent solvent and high temperature resistance.

In a preferred embodiment the release coating is a release coating based on silicone or fluorosilicone compounds, crosslinking vinyl acrylic copolymers or acrylic polymers.

The release coating influences the properties of the adhesive tape in view of writability. In a preferred embodiment the adhesive tape has writability and preferably a good writability, especially using standard felt tip pens.

In a preferred embodiment the release coating is present with a weight below 10 g/m², preferably in the range from 1 to 8 g/m².

If present the release coating, when applied with a weight below 10 g/m², is a thin coating on the surface of the paper. It therefore does not influence the physical properties of the paper. No differences were measured regarding transparency, elongation at break, tensile strength or water uptake.

In a preferred embodiment the adhesive tape has a transparency of at least 50 %.

In a preferred embodiment the transparency of the adhesive tape is at least 55 %, more preferably at least 60 %.

In a preferred embodiment the transparency of the adhesive tape is in the range from 55 % to 100 %, more preferably in the range from 60 % to 100 %, even more preferably in the range from 60 % to 99 %, even more preferably from 60 % to 95 %.

In a preferred embodiment of the invention the adhesive tape has a total thickness in a range from 30 $\mu$m to 80 $\mu$m, preferably from 35 $\mu$m to 70 $\mu$m, more preferably from 38 $\mu$m to 65 $\mu$m.

In a preferred embodiment the tensile strength of the adhesive tape in dry conditions is in the range from 10 to 60 N/cm in MD according to ISO 1924, preferably in the range of 25 to 55 N/cm in MD.

In a preferred embodiment the tensile strength of the adhesive tape in dry conditions is in the range from 10 to 55 N/cm in MD and in the range from 8 to 40 N/cm in CD according to ISO 1924, preferably in the range of 25 to 55 N/cm in MD and 10 to 35 N/cm in CD.

In a preferred embodiment the elongation at break of the adhesive tape in dry conditions is in the range from 0.5 to 10 % in MD, and preferably in the range of 1 to 5 % in MD according to ISO 1924.

In a preferred embodiment the elongation at break of the adhesive tape in dry conditions is in the range of 0.5 to 10 % in MD and 0.5 to 17 % in CD, and preferably in the range of 1 to 5 % in MD and 1 to 10 % in CD according to ISO 1924.

The adhesives tapes of the invention are used preferably in widths of 9 to 50 mm, preferably 9 to 25 mm, more preferably 10 to 20 mm.

In a preferred embodiment the adhesive tape of the invention has a total tape weight in the range from 35 g/m$^2$ to 100 g/m$^2$, preferably 45 g/m$^2$ to 80 g/m$^2$, more preferably from 50 g/m$^2$ to 60 g/m$^2$.

In a preferred embodiment the shear on steel (13*20 mm, 1 kg) is at least 100 min, preferably at least 150, even more preferably in the range from 150 to 7000 according to ISO 29863:2018.

In a preferred embodiment the adhesion to PE (polyethylene substrate, thickness 3 to 10 mm) in an angle of 180° of the adhesive tape is at least 0.2 N/cm, preferably at least 0.25 N/cm, even more preferably in the range from 0.3 N/cm to 3.0 N/cm, more preferably 0.35 N/cm to 1.5 N/cm, according to ISO 29862:2018.

In a preferred embodiment the unwinding force of the adhesive tape (0.30 m/min) is at least 0.03 N/cm, preferably at least 0.05 N/cm, even more preferably in the range from 0.06 N/cm to 2.0 N/cm, more preferably 0.07 N/cm to 1.0 N/cm, according to DIN EN 1944:1996.

In a preferred embodiment the unwinding force of the adhesive tape (30 m/min) is at least 0.05 N/cm, preferably at least 0.1 N/cm, even more preferably in the range from 0.15 N/cm to 2.0 N/cm, more preferably 0.15 N/cm to 1.0 N/cm, according to DIN EN 12026:1996.

The preferred embodiments may be present alone or in combination with one another. The adhesive tape may for example show the wet tensile strength in MD and the elongation at break as described in the preferred embodiments.

Examples for suitable papers for the adhesive tape are Cristal RC 35, Cristal RC 40, Parchment 44, Parchment 42 from Ahlstrom (Finland), Glassine 25.8, Glassine, 30.5, Glassine 35, Glassine 40 from Nippon Paper Industries (Japan), Sylvicta 42 from Arjowiggins (France).

Different papers may be suitable depending on the type of adhesives used. For water-based polyacrylate adhesives Cristal RC 35, Cristal RC 40, Parchment 44, Parchment 42 from Ahlstrom (Finland) and Sylvicta 42 from Arjowiggins (France) are preferred. For rubber based hot melt adhesives Cristal RC 35, Cristal RC 40, Parchment 44, Parchment 42 from Ahlstrom (Finland), Glassine 25.8, Glassine, 30.5, Glassine 35, Glassine 40 from Nippon Paper Industries (Japan) and Sylvicta 42 from Arjowiggins (France) are preferred.

In a preferred embodiment the adhesive tape can be teared by hand without using a cutter or scissors. Preferably the adhesive tape can be teared by hand independent of the tearing direction. In plastic/filmic tapes an initial crack or cut is necessary for tearing. Such a crack or cut is often provided by special cutting method during the tape slitting.

In a preferred embodiment the adhesive tape is copy safe, so that it can be used on documents to be copied by a photocopier.

The invention also refers to the use of a translucent paper as backing layer in an adhesive tape with a transparency of at least 50 %. Preferably the paper is as described previously for the adhesive tape.

Other objects and advantages of the present invention may be ascertained from a reading of the specification and appended claims in conjunction with the drawings therein.

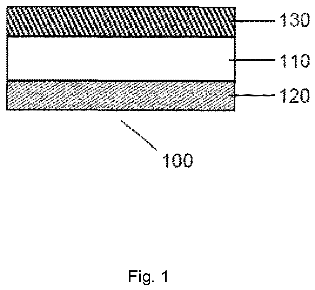

Fig. 1    Schematic drawing of the adhesive tape.

Figure 1 shows a schematic drawing of a preferred embodiment of the invention. The adhesive tape 100 comprises a backing layer 110 comprising a translucent paper. On one side of the paper an adhesive 120 is applied. On the other side of the backing layer 110 a release coating 130 is applied.

Example 1a / 1b (water-based acrylic adhesive):

An adhesive tape was prepared by applying an adhesive composition based on Dow Primal PS 83D Emulsion to one side of a translucent paper. On the other side of the translucent paper a silicone release coating or an acrylic release coating is present. The release coated translucent paper had a thickness of ~30 μm and a grammage of 40 g/m$^2$ and a transparency of 82 %. The water take up was 14 g/m$^2$ and the elongation at break under wet conditions was 1.5 %/9.3 %(MD/CD). The tensile wet strength was 36 N/cm / 16 N/cm (MD/CD). To this paper the adhesive composition was coated to a total thickness of 40-42 μm and a weight of 58 g/m$^2$. The final adhesive tape showed a transparency of 82 %.

Suitable paper for this example is Cristal RC 35, Cristal RC 40, Parchment 44, Parchment 42 from Ahlstrom (Finland)and Sylvicta 42 from Arjowiggins (France).

Example 2 (hot melt adhesive):

The translucent paper was coated with the hot melt adhesive as follows:

| Common Name / Brand Name | Explanation | weight percent (% wt.) |
|---|---|---|
| Europrene® Sol T 190 | SIS - synthetic rubber. Styrene - Isoprene Block Copolymer. Linear block copolymer obtained by anionic polymerization. The polymer is based on styrene and isoprene, where bound styrene content is 68 % by weight and triblock content is 75 % by weight. Versalis S.p.A. | 39 |
| Granolite P | Tackifier. Pentaerythritol ester of rosin. Softening point (ring and ball) 100 °C. DRT (Les Dérives Résiniques Et Terpéniques), France | 35 |
| Granolite SG | Tackifier. Stabilized, glycerin-esterified rosin. Softening point (ring and ball) 84 °C. DRT (Les Dérives Résiniques Et Terpéniques), France | 16 |
| Granolite TEG | Tackifier. Triethylene glycol-esterified rosin resin with low viscosity and very low VOC content. Softening point (ring and ball) <25 °C and viscosity (at 20 °C) 600 DPa*s. DRT (Les Dérives Résiniques Et Terpéniques), France | 10 |
|  | Sum | 100 |

An adhesive tape was prepared by applying the hot melt adhesive to one side of a translucent paper. On the other side of the translucent paper a silicone release coating is present. The release coated translucent paper had a thickness of 35 $\mu$m and a grammage of 40 g/m$^2$ and a transparency of 76.1 %. The water take up was 14 g/m$^2$ and the elongation at break under wet conditions was 3.4/8.7 (MD/CD). The tensile wet strength was 22.8/21 (MD/CD). The tensile strength of the final tape was 35.48 N/cm in MD and elongation at break 2.2 % in MD. To this paper the adhesive composition was coated to a total tape thickness of 45 $\mu$m and a weight of 55* g/m$^2$. The final adhesive tape showed a transparency of 83 %.

Suitable paper for this example is Cristal RC 35, Cristal RC 40, Parchment 44, Parchment 42 from Ahlstrom (Finland), Glassine 25.8, Glassine, 30.5, Glassine 35, Glassine 40 from Nippon Paper Industries (Japan) and Sylvicta 42 from Arjowiggins (France).

Test results of examples 1a, 1b and 2 are shown in table 1.

Table 1:

| Test method | Units | Example 1a (wb. ac.) | Example 1b (wb. ac.) | Example 2 (hot melt) |
|---|---|---|---|---|
|  |  | translucent paper with silicone release | translucent paper with acrylic release | translucent paper with silicone release |
| Coating weight | g/m2 | 18 | 18 | 15 |
| Paper weight | g/m2 | 40 | 40 | 40 |
| Paper thickness | $\mu$m | 30 | 31 | 35 |
| Total thickness | $\mu$m | 40.4 | 42.4 | 45 |
| Total tape weight | g/m$^2$ | 58 | 58 | 55 |
| Transparency | % | 82 | 82 | 83 |
| Adhesion to PE (180°) | N/cm | 0.45 | 0.53 | 1.10 |

(continued)

| Test method | Units | Example 1a (wb. ac.) | Example 1b (wb. ac.) | Example 2 (hot melt) |
|---|---|---|---|---|
| | | translucent paper with silicone release | translucent paper with acrylic release | translucent paper with silicone release |
| Shear on steel, 13*20 mm, 1 kg | min | 781 | 669 | 5000 |
| Unwinding force, 0,30 m/min | N/cm | 0.50 | 0.55 | 0.81 |
| Unwinding force, 30 m/min | N/cm | 0.75 | 0.4 | 0.45 |
| Tensile strength (MD) | N/cm | 37.85 | 37.95 | 35.48 |
| Elongation at break (MD) | % | 1.9 | 2.0 | 2.2 |

**Claims**

1.  Adhesive tape comprising a backing layer and an adhesive layer comprising a pressure-sensitive adhesive composition on at least one side of the backing layer, **characterized in that** the backing layer comprises a translucent paper with a transparency of at least 50 %.

2.  Adhesive tape according to claim 1, **characterized in that** the adhesive tape comprises a release coating on the backing layer opposite to the adhesive composition.

3.  Adhesive tape according to any of the claims 1 or 2, **characterized in that** the paper is a tracing paper.

4.  Adhesive tape according to claim 3, **characterized in that** the tracing paper is natural tracing paper or prepared tracing paper.

5.  Adhesive tape according to any of claims 1 to 4, **characterized in that** the paper has a grammage in the range of 25 to 60 g/m$^2$.

6.  Adhesive tape according to any of claims 1 to 5, **characterized in that** the pressure-sensitive adhesive composition is present with a weight in the range from 5 g/m$^2$ to 30 g/m$^2$.

7.  Adhesive tape according to any of claims 1 to 6, **characterized in that** the thickness of the paper is in the range from 20 $\mu$m to 70 $\mu$m.

8.  Adhesive tape according to any of claims 1 to 7, **characterized in that** the pressure-sensitive adhesive composition is solvent-based, water-based or hotmelt system adhesive.

9.  Adhesive tape according to any of claims 1 to 8, **characterized in that** the pressure-sensitive adhesive composition is based on natural rubber, synthetic rubber, acrylic-based adhesives, silicone-based adhesives, modified acrylic-based adhesives, modified rubber-based adhesives, and combinations thereof.

10. Adhesive tape according to any of claims 1 to 9, **characterized in that** the pressure-sensitive adhesive composition is based on rubber based hot melt adhesives or water-based polyacrylate adhesives.

11. Adhesive tape according to any of claims 1 to 10, **characterized in that** the paper is made of at least 95 % by weight natural cellulose fibers.

12. Adhesive tape according to any of claims 1 to 11, **characterized in that** the paper is not impregnated with saturants and/or impregnated with an oil or other transparentizing chemical.

13. Adhesive tape according to any of claims 1 to 12, **characterized in that** the adhesive tape has a transparency of at least 50 %.

14. Adhesive tape roll comprising the adhesive tape according to any one of claims 2 to 13.

15. Use of a translucent paper as backing layer in an adhesive tape, **characterized in that** the translucent paper has a transparency of at least 50 %.

Fig. 1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/099829 A1 (TETSUMOTO TAKUYA [JP] ET AL) 29 May 2003 (2003-05-29) * paragraphs [0001], [0017]; claims; examples * | 1-6,8-15 | INV. C09J7/21 C09J7/38 |
| X | DE 10 2022 118821 A1 (COMPOSTELLA GMBH [DE]) 9 February 2023 (2023-02-09) * paragraphs [0002], [0005], [0009]; claims * | 1,3-6,8, 9,11-15 | |
| X | DE 11 33 229 B (MARIA SOELL PAPIERVERARBEITUNG) 12 July 1962 (1962-07-12) * column 3, line 41 to column 4, line 20; claims; figures * | 1,3,4, 11-15 | |
| X | FR 2 847 585 A1 (THIBIERGE ET COMAR [FR]) 28 May 2004 (2004-05-28) * page 2, lines 25 to 29; claims; examples * | 1,3,4,6, 8-13,15 | |
| X | FR 2 883 570 A1 (ARJOWIGGINS CANSON SOC PAR ACT [FR]) 29 September 2006 (2006-09-29) * page 5, line 15 to page 6, line 2; claims * | 1,3-5, 8-13,15 | TECHNICAL FIELDS SEARCHED (IPC) C09J C08J |
| X | EP 1 985 677 A1 (SIHL GMBH [DE]) 29 October 2008 (2008-10-29) * paragraphs [0011] – [0016], [0019], [0035]; claims; examples * | 1-15 | |

The present search report has been drawn up for all claims

| Place of search | Date of completion of the search | Examiner |
|---|---|---|
| Munich | 9 August 2023 | Kahl, Philipp |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 3629

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | Publication date | Patent family member(s) | | | Publication date |
|---|---|---|---|---|---|---|
| US 2003099829 | A1 | 29-05-2003 | EP | 1314769 | A1 | 28-05-2003 |
| | | | JP | 2003160766 | A | 06-06-2003 |
| | | | US | 2003099829 | A1 | 29-05-2003 |
| DE 102022118821 | A1 | 09-02-2023 | DE | 102022118821 | A1 | 09-02-2023 |
| | | | DE | 202021104124 | U1 | 12-08-2021 |
| DE 1133229 | B | 12-07-1962 | NONE | | | |
| FR 2847585 | A1 | 28-05-2004 | NONE | | | |
| FR 2883570 | A1 | 29-09-2006 | NONE | | | |
| EP 1985677 | A1 | 29-10-2008 | AT | 467667 | T | 15-05-2010 |
| | | | EP | 1985677 | A1 | 29-10-2008 |
| | | | WO | 2008131822 | A1 | 06-11-2008 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 4313008 A1
- DE 2845541 A
- EP 1336683 B1

**Non-patent literature cited in the description**

- **DONATAS SATAS.** Handbook of Pressure Sensitive Adhesive Technology. 1999
- **T.G. FOX.** *Bull. Am. Phys. Soc.,* 1956, vol. 1, 123